# FASCICULE DE BREVET EUROPEEN

(11) **EP 3 312 581 B1**
(45) Date de publication et mention de la délivrance du brevet: **05.08.2020**
(21) Numéro de dépôt: 17197624.4
(22) Date de dépôt: 20.10.2017
(51) Int. Cl.: G01M 1/16, G01M 1/12, G01M 1/30

(54) **PROCÉDÉ ET BANC D'ÉQUILIBRAGE D'UNE PIÈCE ANNULAIRE**
AUSWUCHTUNGSVERFAHREN UND -WERKBANK FÜR EIN RINGFÖRMIGES TEIL
METHOD AND BENCH FOR BALANCING AN ANNULAR PART

(30) Priorité: 21.10.2016 FR 1660252
(43) Date de publication de la demande: 25.04.2018
(73) Titulaire: NTN-SNR Roulements, 74000 Annecy (FR)
(72) Inventeur: KELLER, Gilles, 74350 Cruseilles (FR)
(74) Mandataire: Alatis

(56) Documents cités:
- EP-A2- 0 922 950
- WO-A1-03/078730
- GB-A- 2 320 756

## Description

### DOMAINE TECHNIQUE DE L'INVENTION

L'invention se rapporte à l'équilibrage des cages de roulement pour des applications très exigeantes, notamment pour l'aéronautique ou l'astronautique. Par extension, elle se rapporte à l'équilibrage de pièces annulaires.

### ETAT DE LA TECHNIQUE ANTERIEURE

Les cages de roulements aéronautiques doivent être équilibrées précisément afin de limiter les balourds, causes de vibrations, à des valeurs très faibles. Ces roulements tournant généralement très vite, la tolérance sur l'excentricité maximale de positionnement du centre de gravité par rapport à l'axe de rotation est extrêmement faible, par exemple inférieure à 15µm pour certaines classes d'équilibrage.

Pour garantir ces faibles tolérances, les cages de roulement, au cours de leur fabrication, font l'objet d'une mesure de balourd, suivie le cas échéant d'une retouche par usinage. La mesure est effectuée sur un banc d'équilibrage comportant une platine d'équilibrage tournante, à laquelle est fixée la cage de roulement pour la mesure. On doit naturellement éviter que la mesure effectuée soit perturbée par un centrage imprécis de la cage de roulement sur la platine d'équilibrage, ce qui amène à utiliser pour la prise en charge de la cage sur la platine d'équilibrage un outillage de centrage limitant l'erreur de centrage nettement en dessous de la tolérance recherchée sur la cage de roulement, par exemple à environ 5µm. De tels outillages de centrage existent, mais sont particulièrement onéreux. Ils ont tendance à déformer les pièces et sont spécifiques à un diamètre de centrage donné, à quelques centièmes de millimètre près. Certains documents de l'état de la technique pertinents pour l'invention sont les brevets suivants: EP 0 922 950 A2, GB 2 320 756 A et WO 03/078730 A1.

### EXPOSE DE L'INVENTION

L'invention vise à proposer des moyens permettant un équilibrage de pièces annulaires, notamment de pièces annulaires constitutives de roulements, par exemple des cages de roulement ou des bagues de roulement, qui ne présentent pas les inconvénients de l'état de la technique.

Pour ce faire est proposé, selon un premier aspect de l'invention, un procédé d'équilibrage d'une pièce annulaire comportant les étapes suivantes :
- mise en place de la pièce annulaire sur une platine d'équilibrage d'un banc d'équilibrage, la platine d'équilibrage étant apte à tourner autour d'un axe de référence du banc d'équilibrage ;
- mesure, par le banc d'équilibrage et en faisant tourner la platine d'équilibrage, d'un balourd apparent de la pièce annulaire placée sur la platine d'équilibrage, par rapport à l'axe de référence du banc d'équilibrage ;
- mesure dimensionnelle d'un contour d'une surface annulaire de référence de la pièce annulaire ; et
- calcul d'un balourd réel de la pièce annulaire fonction de la masse de la pièce annulaire, du contour mesuré et du balourd apparent.

La mesure du contour de la pièce annulaire permet de déterminer l'effet du positionnement de la pièce annulaire sur le balourd apparent mesuré, et d'en déduire un balourd réel. Le contour doit être situé sur une surface de référence définissant l'axe de rotation fonctionnel de la pièce. Il s'agit donc de préférence d'une surface de révolution autour de l'axe de rotation, par exemple une surface cylindrique.

La mesure du balourd apparent et la mesure du contour de la pièce annulaire peuvent être faites simultanément en faisant tourner la platine d'équilibrage.

La mesure du balourd apparent fait appel aux capteurs intrinsèques au banc d'équilibrage. La mesure du contour de la pièce annulaire est quant à elle faite de préférence à l'aide d'un palpeur avec ou sans contact et d'un capteur angulaire lisant une information de position angulaire sur un codeur lié à la platine d'équilibrage.

L'ordre des étapes de mesure du balourd apparent et de mesure dimensionnelle du contour peut être inversé, ou les deux opérations de mesure simultanées.

Selon un mode de réalisation préféré, le calcul du balourd réel de la pièce annulaire comporte un calcul d'un balourd de positionnement de la pièce annulaire, fonction de la masse de la pièce annulaire et du contour mesuré. Préférentiellement, le calcul du balourd de positionnement de la pièce annulaire comporte un calcul d'une excentration d'un cercle idéal représentatif du contour mesuré par rapport à l'axe de référence de la platine d'équilibrage, le balourd de positionnement étant calculé en fonction de la masse de la pièce annulaire de l'excentration calculée. Préférentiellement, le calcul du balourd de positionnement de la pièce annulaire comporte un calcul du centre du cercle idéal représentatif du contour mesuré, par un algorithme de calcul prédéterminé, de préférence par une méthode des moindres carrés. En pratique, le calcul de l'excentration délivre au moins deux valeurs numériques représentatives de la position du centre du cercle idéal par rapport à l'axe de référence dans un plan géométrique perpendiculaire à l'axe de référence. Plus généralement, le calcul du balourd de positionnement de la pièce annulaire délivre au moins deux valeurs numériques représentatives d'un vecteur de balourd de positionnement perpendiculaire à l'axe de référence.

De façon similaire, la mesure du balourd apparent de la pièce annulaire délivre au moins deux valeurs numériques représentatives d'un vecteur de balourd apparent perpendiculaire à l'axe de référence. Il en résulte que le calcul du balourd réel de la pièce annulaire délivre au moins deux valeurs numériques représentatives d'un vecteur de balourd réel perpendiculaire à l'axe de référence. En pratique, le vecteur de balourd réel est obtenu en soustrayant le vecteur de balourd de positionnement du vecteur de balourd apparent.

Suivant un mode de réalisation, on prévoit en outre une mesure d'un balourd à vide de la platine d'équilibrage, qui délivre de préférence au moins deux valeurs numériques représentatives d'un vecteur de balourd à vide perpendiculaire à l'axe de référence, le vecteur de balourd réel étant obtenu en soustrayant le vecteur de balourd de positionnement et le vecteur de balourd à vide du vecteur de balourd apparent. Cette mesure permet notamment de prendre en compte le balourd des moyens de bridage de la pièce annulaire sur la platine d'équilibrage.

Suivant un mode de réalisation, la mise en place de la pièce annulaire comporte un bridage de la pièce annulaire sur la platine d'équilibrage par des moyens de bridage. Les moyens de bridage doivent satisfaire de préférence à deux exigences: d'une part, ils doivent éviter toute déformation de la pièce annulaire de nature à fausser la mesure; d'autre part, ils ne doivent pas générer en eux-mêmes un balourd supplémentaire variable dans le temps. Concernant ce dernier point, notons qu'il est aisé de mesurer à vide un balourd généré par l'outillage pour l'éliminer des mesures suivantes par les calculs. Mais ceci n'est efficace que si le balourd généré par l'outillage n'est pas modifié au moment du bridage de la pièce annulaire objet de la mesure. C'est pourquoi les pièces mobiles de ces moyens de bridage, par exemple des vis ou des pointeaux, doivent avoir une faible masse. Pour satisfaire ces deux exigences, les pièces mobiles des moyens de bridage sont de préférence des pièces en plastique.

De préférence, on retouche la pièce annulaire par usinage de ou ajout de matière, en fonction du balourd réel calculé de la pièce annulaire.

Le procédé proposé nécessite une connaissance de la masse de la pièce annulaire. En pratique, il comporte une mesure ou une saisie de la masse de la pièce annulaire. La mesure peut être effectuée notamment avant la mise en place de la pièce annulaire sur la platine d'équilibrage, ou directement sur la platine d'équilibrage du banc d'équilibrage, si celui-ci est équipé d'une balance.

Le procédé est particulièrement adapté à l'équilibrage d'une pièce d'un roulement, notamment une cage de roulement ou une bague de roulement.

Suivant un autre aspect de l'invention, celle-ci a trait à un banc d'équilibrage pour l'exécution de la procédure d'équilibrage précédemment décrite. Elle a trait en particulier à un banc d'équilibrage comportant une platine d'équilibrage apte à tourner autour d'un axe de référence, des moyens de fixation d'une pièce annulaire à la platine d'équilibrage, des moyens de mesure d'un balourd apparent d'un équipage tournant constitué par la platine d'équilibrage et la pièce à équilibrer, un dispositif de mesure d'un contour de la pièce annulaire, et des moyens de calcul d'un balourd réel en fonction du balourd apparent mesuré et du contour mesuré de la pièce annulaire.

De préférence, le dispositif de mesure d'un contour de la pièce annulaire comporte un palpeur avec ou sans contact et un détecteur de position angulaire de la platine autour de l'axe de référence. Le détecteur de position angulaire lit une information de position qui est portée de préférence par un codeur de position angulaire fixe en rotation par rapport à la platine d'équilibrage. La mesure de position angulaire peut être de tout type approprié, par exemple optique ou électromagnétique.

De préférence, les moyens de fixation sont constitués par des pièces mobiles en plastique, en particulier des vis de fixation ou des pointeaux.

### BREVE DESCRIPTION DES FIGURES

D'autres caractéristiques et avantages de l'invention ressortiront à la lecture de la description qui suit, en référence aux figures annexées, qui illustrent :
- la figure 1, une vue isométrique d'un banc d'équilibrage d'une cage de roulement, selon un premier mode de réalisation de l'invention;
- la figure 2, une vue de côté du banc d'équilibrage de la figure 1;
- la figure 3, une vue isométrique partiellement coupée d'une partie du banc d'équilibrage de la figure 1;
- la figure 4, une vue schématique d'une instrumentation du banc d'équilibrage de la figure 1;
- la figure 5, une vue isométrique d'un banc d'équilibrage d'une cage de roulement, selon un deuxième mode de réalisation de l'invention.

Pour plus de clarté, les éléments identiques ou similaires sont repérés par des signes de référence identiques sur l'ensemble des figures.

### DESCRIPTION DETAILLEE DE MODES DE REALISATION

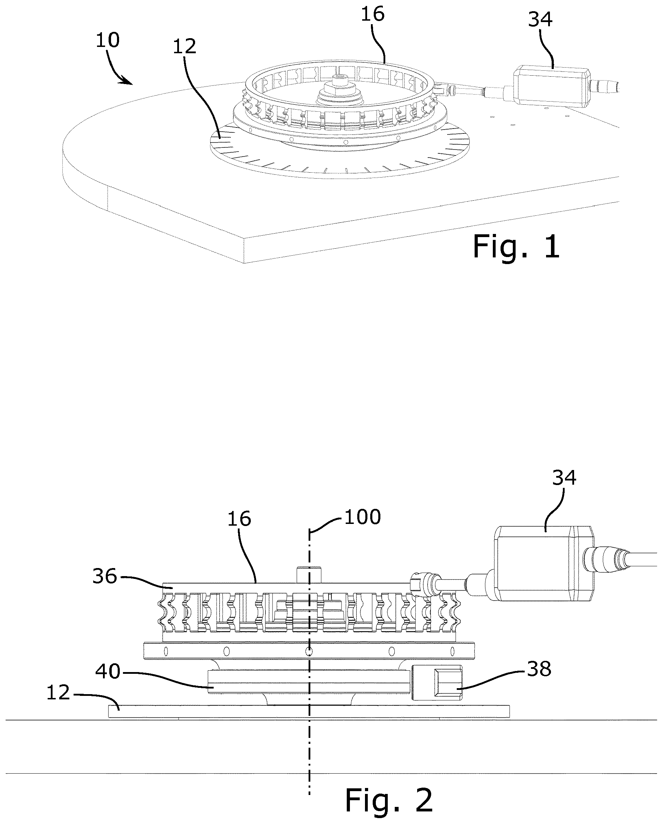

Sur les figures **1** à **4** est illustré un banc d'équilibrage **10** comportant une platine d'équilibrage **12** apte à tourner autour d'un axe de référence **100** et entraînée par un moteur **13.**

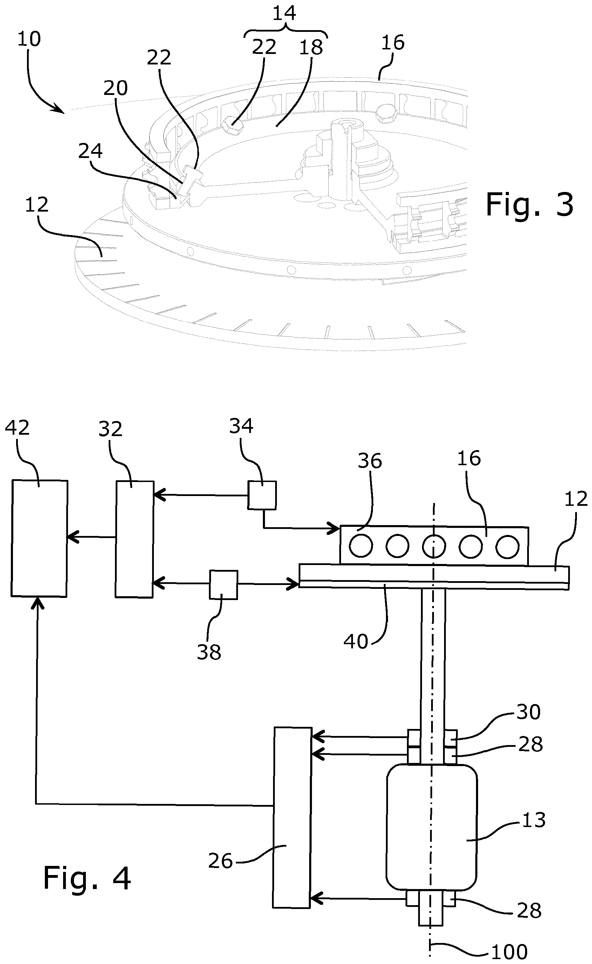

Des moyens de fixation **14,** illustrés sur la figure **3****,** permettent de fixer à la platine d'équilibrage **12** une pièce annulaire **16,** en l'occurrence une pièce annulaire de roulement, à savoir une bague de roulement ou, comme illustré sur les figures, une cage de roulement. Les moyens de fixation **14** comportent un support annulaire **18** fixe par rapport à la platine d'équilibrage **12** et parfaitement centré sur l'axe de révolution **100** de la platine d'équilibrage **12** de manière à ne pas générer de balourd. Ce support annulaire **18** comporte des trous filetés **20** orientés dans des plans contenant l'axe de révolution **100,** dans une direction oblique par rapport à l'axe de révolution **100,** par exemple à 45°. Ces trous filetés **20** permettent l'insertion de vis de fixation **22** en plastique venant légèrement en appui contre un jonc plastique **24** lui-même en contact avec la périphérie intérieure de la pièce annulaire **16** à équilibrer, de façon à solidariser à la platine d'équilibrage **12** la pièce annulaire **16** à équilibrer.

Le banc d'équilibrage **10** est instrumenté, comme illustré plus particulièrement sur la figure **4****.** Il présente notamment, et de manière connue en soi, des moyens de mesure **26** d'un balourd apparent d'un équipage tournant constitué par la platine d'équilibrage **12** et la pièce annulaire **16** à équilibrer. Ces moyens de mesure **26** peuvent comporter un ou plusieurs cellules dynamométriques **28** intégrées à des paliers de guidage d'un arbre rotatif de support de la platine, et un capteur de vitesse de révolution **30** mesurant la vitesse de révolution de la platine d'équilibrage **12** autour de l'axe de révolution **100,** ou tout autre moyen de mesure permettant de déterminer au moins deux valeurs numériques représentatives d'une intensité (exprimée par exemple en mètre-kilogramme) et d'une direction du balourd de l'équipage mobile. Les deux valeurs numériques peuvent être l'une représentative de l'intensité et l'autre de la direction d'un vecteur balourd (coordonnées polaires), ou contenir l'une et l'autre une partie de l'information d'intensité et de direction (en coordonnées cartésiennes).

L'instrumentation du banc d'équilibrage **10** comporte également un dispositif de mesure **32** d'un contour de la pièce annulaire **16.** Dans ce mode de réalisation, ce dispositif de mesure **32** comporte un palpeur **34** qui vient au contact d'une surface cylindrique périphérique de référence **36** de la pièce annulaire **16,** et un capteur de position angulaire **38,** qui vient lire une information de position angulaire sur un codeur **40** optique ou magnétique disposé sur la platine d'équilibrage **12** ou l'arbre de support de la platine d'équilibrage **12,** de façon à déterminer la position angulaire de la platine d'équilibrage **12** par rapport à une référence prédéterminée autour de l'axe de référence **100.**

La position du palpeur **34** par rapport à un bâti du banc d'équilibrage **10** est figée et parfaitement étalonnée.

L'instrumentation du banc d'équilibrage **10** comporte également un calculateur **42** recevant des signaux des moyens de mesure **26** du balourd apparent et du dispositif de mesure **32** du contour de la pièce annulaire **16.** Tout ou partie des moyens de mesure **26** du balourd apparent et du dispositif de mesure **32** du contour de la pièce annulaire **16** peut être physiquement intégrée au calculateur **42.**

Le banc d'équilibrage **10** est utilisé de la façon suivante.

Dans une étape préalable, on détermine la masse de la pièce annulaire **16** à équilibrer, par pesée ou par tout autre moyen. La masse de la pièce annulaire **16** à équilibrer peut également être connue avec précision du fait même de son procédé de fabrication. Cette donnée est saisie ou mémorisée dans le calculateur **42** du banc d'équilibrage **10.** Alternativement, le banc d'équilibrage **10** peut également comporter des moyens de pesée intégrés, reliés au calculateur **42** du banc d'équilibrage **10.**

On effectue par ailleurs une mesure d'un balourd à vide de la platine d'équilibrage **12** équipée des vis de fixation **22.**

La pièce annulaire **16** à équilibrer est ensuite positionnée sur la platine d'équilibrage **12** et fixée à l'aide des vis de fixation **22.** Les vis de fixation **22** sont serrées suffisamment pour assurer une solidarisation de la pièce annulaire **16** avec la platine d'équilibrage **12,** mais sans pour autant créer de déformation notable de la pièce annulaire **16.**

On fait ensuite tourner la platine d'équilibrage **12** pour déterminer un nuage de points de mesure représentatifs du contour de la pièce annulaire **16.** Le contour en question doit être une surface de révolution représentative de l'axe de révolution réel de la pièce annulaire **16.** Il s'agit de préférence d'une surface cylindrique. Chaque point de mesure est caractérisé par une information de distance par rapport à une référence de position du palpeur **34,** et une information de position angulaire donnée par capteur de position angulaire **38.**

Ces informations permettent au calculateur **42** de déterminer par un algorithme de calcul prédéterminé, par exemple par une méthode des moindres carrés, la position du centre du cercle idéal représentatif du contour mesuré par rapport à l'axe de référence **100.** Ce cercle est de préférence le cercle qui minimise la distance avec chacun des points du nuage de points mesurés par le dispositif de mesure **32** du contour de la pièce annulaire. L'algorithme peut comporter un prétraitement visant à éliminer des valeurs aberrantes dans le nuage de point, ou si les mesures sont effectuées sur plusieurs tours et comprennent plusieurs mesures pour chaque position angulaire, un traitement un calcul de moyenne des valeurs pour chaque position angulaire. La position du cercle idéal, dans un plan perpendiculaire à l'axe de référence **100,** est déterminée par deux valeurs numériques, par exemple un angle et une distance en coordonnées polaires, ou deux valeurs d'abscisse et d'ordonnée en coordonnées cartésiennes.

Connaissant la position du centre de la pièce annulaire **16** à équilibrer par rapport à l'axe de référence **100** et la masse de la pièce annulaire **16** à équilibrer, on est en mesure d'estimer l'effet du positionnement imparfait de la pièce à équilibrer, en calculant un vecteur balourd de positionnement, dont l'intensité est le produit de la masse de la pièce à équilibrer par la distance entre le centre du cercle idéal et l'axe de référence **100,** et dont la direction est la direction polaire pointant vers le centre du cercle idéal.

On fait ensuite tourner la platine d'équilibrage **12** à plus grande vitesse pour mesurer le balourd de l'équipage mobile constitué par la platine d'équilibrage **12,** la pièce annulaire **16** et les moyens de fixation **14.** Ce balourd est une mesure imparfaite du balourd de la pièce annulaire **16,** puisqu'elle est parasitée par le balourd de positionnement et l'éventuel balourd des moyens de fixation **14.** C'est la raison pour laquelle on l'appelle ici "balourd apparent" de la pièce annulaire **16** par rapport à l'axe de référence **100.** Comme le précédent, ce balourd est représenté par un vecteur de balourd, c'est-à-dire par deux valeurs numériques, représentant une intensité et une direction angulaire.

Parce que les pièces mobiles des moyens de fixation **14,** en l'occurrence les vis de fixation **22,** sont légères, la variation du balourd des moyens de fixation **14** entre la mesure à vide et la mesure avec la pièce annulaire **16** peut être négligée. On peut alors avoir une très bonne estimation du balourd réel de la pièce annulaire **16** à équilibrer par rapport à l'axe défini par la surface de référence, à partir du balourd apparent (par rapport à l'axe de référence **100**) et du balourd de positionnement (par rapport à l'axe de référence **100**). Plus précisément, on peut déterminer le balourd réel comme la différence vectorielle entre le balourd apparent et le balourd de positionnement.

Au moment du positionnement ou de la fixation de la pièce annulaire **16** à la platine d'équilibrage **12,** ou à l'issue du calcul du balourd réel, on a créé sur la pièce annulaire **16** un repère d'indexation physique, ou on a identifié un tel repère préexistant, de façon que l'on puisse associer la direction du balourd audit repère. Ce repère peut consister en un ou plusieurs points de repérage, par exemple trois ou quatre points permettant de situer le centre du cercle idéal. On peut alors exprimer la direction et l'intensité du balourd réel calculé dans un repère propre à la pièce à équilibrer.

Ceci permet, après avoir démonté la pièce à équilibrer du banc d'équilibrage **10,** de la retoucher, par exemple par usinage ou ajout de matière, en fonction du balourd réel calculé de la pièce annulaire **16.**

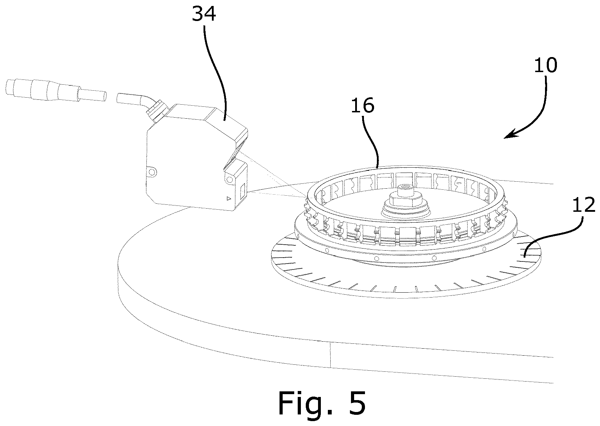

Le banc d'essai de la figure **5** diffère de celui des figures **1** à **4** essentiellement par le type de palpeur **34** utiliser pour déterminer le contour de la pièce annulaire **16** à équilibrer, qui est ici un palpeur **34** sans contact.

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

L'ordre des opérations de détermination du contour de la pièce annulaire 16 et de mesure du balourd apparent peut être inversé. Ces opérations peuvent être simultanées.

Dans le cas où le balourd de positionnement calculé est trop important, le procédé peut imposer un repositionnement de la pièce annulaire **16,** en indiquant dans quelle direction et avec quelle amplitude de déplacement de repositionnement doit être opéré. Le cas échéant, le calculateur **42** peut donner des instructions précises, du type: dévisser telle vis de fixation **22** de serrage de tant de degrés, et visser telle autre de tant de degrés.

## Revendications

1. Procédé d'équilibrage d'une pièce annulaire (16), notamment une pièce d'un roulement, notamment une cage de roulement ou une bague de roulement, le procédé comportant les étapes suivantes :
- mise en place de la pièce annulaire (16) sur une platine d'équilibrage (12) d'un banc d'équilibrage (10), la platine d'équilibrage (12) étant apte à tourner autour d'un axe de référence (100) du banc d'équilibrage (10) ;
- mesure, par le banc d'équilibrage (10) et en faisant tourner la platine d'équilibrage (12), d'un balourd apparent de la pièce annulaire (16) placée sur la platine d'équilibrage, par rapport à l'axe de référence (100) du banc d'équilibrage ;
- mesure dimensionnelle d'un contour d'une surface annulaire de référence de la pièce annulaire (16) placée sur la platine d'équilibrage (12) ;
- calcul d'un balourd réel de la pièce annulaire (16) fonction de la masse de la pièce annulaire (16), du contour mesuré et du balourd apparent.

2. Procédé d'équilibrage selon la revendication 1, **caractérisé en ce que** le calcul du balourd réel de la pièce annulaire (16) comporte un calcul d'un balourd de positionnement de la pièce annulaire (16), fonction de la masse de la pièce annulaire (16) et du contour mesuré.

3. Procédé d'équilibrage selon la revendication 2, **caractérisé en ce que** le calcul du balourd de positionnement de la pièce annulaire (16) comporte un calcul d'une excentration d'un cercle idéal représentatif du contour mesuré par rapport à l'axe de référence (100) de la platine d'équilibrage (12), le balourd de positionnement étant calculé en fonction de la masse de la pièce annulaire (16) de l'excentration calculée.

4. Procédé d'équilibrage selon la revendication 3, **caractérisé en ce que** le calcul du balourd de positionnement de la pièce annulaire (16) comporte un calcul du centre du cercle idéal représentatif du contour mesuré, par un algorithme de calcul prédéterminé, de préférence par une méthode des moindres carrés.

5. Procédé d'équilibrage selon la revendication 3 ou la revendication 4, **caractérisé en ce que** le calcul de l'excentration délivre au moins deux valeurs numériques représentatives de la position du centre du cercle idéal par rapport à l'axe de référence (100) dans un plan géométrique perpendiculaire à l'axe de référence (100).

6. Procédé d'équilibrage selon l'une quelconque des revendications 2 à 5, **caractérisé en ce que** le calcul du balourd de positionnement de la pièce annulaire (16) délivre au moins deux valeurs numériques représentatives d'un vecteur de balourd de positionnement perpendiculaire à l'axe de référence (100).

7. Procédé d'équilibrage selon l'une quelconque des revendications précédentes, **caractérisé en ce que** la mesure du balourd apparent de la pièce annulaire (16) délivre au moins deux valeurs numériques représentatives d'un vecteur de balourd apparent perpendiculaire à l'axe de référence (100).

8. Procédé d'équilibrage selon les revendications 6 et 7, **caractérisé en ce que** le calcul du balourd réel de la pièce annulaire (16) délivre au moins deux valeurs numériques représentatives d'un vecteur de balourd réel perpendiculaire à l'axe de référence (100).

9. Procédé d'équilibrage selon la revendication 8, **caractérisé en ce que** le vecteur de balourd réel est obtenu en soustrayant le vecteur de balourd de positionnement du vecteur de balourd apparent.

10. Procédé d'équilibrage selon l'une quelconque des revendications précédentes, **caractérisé en ce qu'**il comporte en outre une mesure d'un balourd à vide de la platine d'équilibrage.

11. Procédé selon les revendications 6, 7 et 10, **caractérisé en ce que** la mesure du balourd à vide délivre au moins deux valeurs numériques représentatives d'un vecteur de balourd à vide perpendiculaire à l'axe de référence (100), le vecteur de balourd réel étant obtenu en soustrayant le vecteur de balourd de positionnement et le vecteur de balourd à vide du vecteur de balourd apparent.

12. Procédé d'équilibrage selon l'une quelconque des revendications précédentes, **caractérisé en ce que** la mise en place de la pièce annulaire (16) comporte un bridage de la pièce annulaire (16) sur la platine d'équilibrage par des moyens de bridage.

13. Procédé d'équilibrage selon l'une quelconque des revendications précédentes, **caractérisé en ce qu'**il comporte en outre une retouche de la pièce annulaire (16) par usinage ou ajout de matière, en fonction du balourd réel calculé de la pièce annulaire (16).

14. Procédé d'équilibrage selon l'une quelconque des revendications précédentes, **caractérisé en ce qu'**il comporte une mesure ou une saisie de la masse de la pièce annulaire (16).

15. Banc d'équilibrage (10) comportant une platine d'équilibrage (12) apte à tourner autour d'un axe de référence (100), des moyens de fixation (14) d'une pièce annulaire (16) à la platine d'équilibrage (12), des moyens de mesure (26) d'un balourd apparent d'un équipage tournant constitué par la platine d'équilibrage (12) et la pièce à équilibrer, **caractérisé en ce qu'**il comporte un dispositif de mesure (32) d'un contour de la pièce annulaire (16), et des moyens de calcul d'un balourd réel en fonction du balourd apparent mesuré et du contour mesuré de la pièce annulaire (16).

## Patentansprüche

1. Verfahren zum Ausgleichen eines Ringstücks (16), insbesondere eines Stücks eines Lagers, insbesondere eines Lagerkäfigs oder eines Lagerrings, wobei das Verfahren die folgenden Schritte umfasst:
- Einsetzen des ringförmigen Stücks (16) auf einer Ausgleichsplatine (12) einer Ausgleichsbank (10), wobei die Ausgleichsplatine (12) geeignet ist, sich um eine Referenzachse (100) der Ausgleichsbank (10) zu drehen;
- Messen, durch die Ausgleichsbank (10) und unter Drehen der Ausgleichsplatine (12), einer offensichtlichen Unwucht des ringförmigen Stücks (16), das auf der Ausgleichsplatine angeordnet ist, im Verhältnis zur Referenzachse (100) der Ausgleichsbank;
- Abmessungsmessen eines Umfangs einer ringförmigen Referenzoberfläche (12) des ringförmigen Stücks (16), das auf der Ausgleichsplatine (12) angeordnet ist;
- Berechnen einer effektiven Unwucht des ringförmigen Stücks (16) in Abhängigkeit von der Masse des ringförmigen Teils (16), des gemessenen Umfangs und der offensichtlichen Unwucht.

2. Verfahren zum Ausgleichen gemäß Anspruch 1, **dadurch gekennzeichnet, dass** die Berechnung der effektiven Unwucht des ringförmigen Stücks (16) eine Berechnung einer Positionierungsunwucht des ringförmigen Stücks (16) in Abhängigkeit von der Masse des ringförmigen Stücks (16) und des gemessenen Umfangs umfasst.

3. Verfahren zum Ausgleichen gemäß Anspruch 2, **dadurch gekennzeichnet, dass** die Berechnung der Positionierungsunwucht des ringförmigen Stücks (16) eine Berechnung einer Unrundheit eines idealen Kreises, der den gemessenen Umfang darstellt, im Verhältnis zur Referenzachse (100) der Ausgleichsplatine (12) umfasst, wobei die Positionierungsunwucht in Abhängigkeit von der Masse des ringförmigen Stücks (16) und der berechneten Unrundheit berechnet ist.

4. Verfahren zum Ausgleichen gemäß Anspruch 3, **dadurch gekennzeichnet, dass** die Berechnung der Positionierungsunwucht des ringförmigen Stücks (16) eine Berechnung des Zentrums des idealen Kreises, der den gemessenen Umfang darstellt, durch einen vorbestimmten Berechnungsalgorithmus, bevorzugt durch eine Methode der kleinsten Quadrate umfasst.

5. Verfahren zum Ausgleichen gemäß Anspruch 3 oder Anspruch 4, **dadurch gekennzeichnet, dass** die Berechnung der Unrundheit wenigstens zwei digitale Werte liefert, die die Position des Zentrums des idealen Zirkels im Verhältnis zur Referenzachse (100) in einer geometrischen Ebene darstellen, die lotrecht zur Referenzachse (100) ist.

6. Verfahren zum Ausgleichen gemäß irgendeinem der Ansprüche 2 bis 5, **dadurch gekennzeichnet, dass** die Berechnung der Positionierungsunwucht des ringförmigen Stücks (16) wenigstens zwei digitale Werte liefert, die einen Unwuchtvektor der Positionierung darstellen, der zur Referenzachse lotrecht ist.

7. Verfahren zum Ausgleichen gemäß irgendeinem der voranstehenden Ansprüche, **dadurch gekennzeichnet, dass** die Messung der offensichtlichen Unwucht des ringförmigen Stücks (16) wenigstens zwei digitale Werte liefert, die einen Vektor einer offensichtlichen Unwucht darstellen, der lotrecht zur Referenzachse (100) ist.

8. Verfahren zum Ausgleichen gemäß den Ansprüchen 6 und 7, **dadurch gekennzeichnet, dass** die Berechnung der effektiven Unwucht des ringförmigen Stücks (16) wenigstens zwei digitale Werte liefert, die einen Vektor einer effektiven Unwucht darstellen, der lotrecht zur Referenzachse (100) ist.

9. Verfahren zum Ausgleichen gemäß Anspruch 8, **dadurch gekennzeichnet, dass** der Vektor der effektiven Unwucht durch Subtrahieren des Vektors der Positionierungsunwucht vom Vektor der offensichtlichen Unwucht erhalten wird.

10. Verfahren zum Ausgleichen gemäß irgendeinem der voranstehenden Ansprüche, **dadurch gekennzeichnet, dass** es darüber hinaus eine Messung einer leeren Unwucht der Ausgleichsplatine umfasst.

11. Verfahren gemäß den Ansprüchen 6, 7 und 10, **dadurch gekennzeichnet, dass** die Messung der leeren Unwucht wenigstens zwei digitale Werte liefert, die einen Vektor einer leeren Unwucht darstellen, der lotrecht zur Referenzachse (100) ist, wobei der Vektor der effektiven Unwucht durch Subtrahieren des Vektors der Positionierungsunwucht und des Vektors der leeren Unwucht vom Vektor der offensichtlichen Unwucht erhalten wird.

12. Verfahren zum Ausgleichen gemäß irgendeinem der voranstehenden Ansprüche, **dadurch gekennzeichnet, dass** das Einsetzen des ringförmigen Stücks (16) ein Verflanschen des ringförmigen Stücks (16) auf der Ausgleichsplatine durch Flanschmittel umfasst.

13. Verfahren zum Ausgleichen gemäß irgendeinem der voranstehenden Ansprüche, **dadurch gekennzeichnet, dass** es darüber hinaus ein Nacharbeiten des ringförmigen Stücks (16) durch Bearbeitung oder Hinzufügen von Material in Abhängigkeit von der berechneten effektiven Unwucht des ringförmigen Stücks (16) umfasst.

14. Verfahren zum Ausgleichen gemäß irgendeinem der voranstehenden Ansprüche, **dadurch gekennzeichnet, dass** es eine Messung oder ein Erfassen der Masse des ringförmigen Stücks (16) umfasst.

15. Ausgleichsbank (10), umfassend eine Ausgleichsplatine (12), die zum Drehen um eine Referenzachse (100) geeignet ist, Befestigungsmittel (14) eines ringförmigen Stücks (16) an der Ausgleichsplatine (12), Messmittel (26) einer offensichtlichen Unwucht einer sich drehenden Struktur, die durch die Ausgleichsplatine (12) und das auszugleichende Stück gebildet ist, **dadurch gekennzeichnet, dass** es eine Messvorrichtung (32) eines Umfangs des ringförmigen Stücks (16), und Berechnungsmittel einer effektiven Unwucht in Abhängigkeit von der gemessenen offensichtlichen Unwucht und des gemessenen Umfangs des ringförmigen Stücks (16) umfasst.

## Claims

1. Method for balancing an annular part (16), notably a part of a bearing, notably a bearing cage or a bearing cup, the method comprising the following steps:
- placing the annular part (16) on a balancing plate (12) of a balancing bench (10), the balancing plate (12) being capable of turning around a reference axis (100) of the balancing bench (10);
- measuring, by the balancing bench (10) and while turning the balancing plate (12), an apparent imbalance of the annular part (16) placed on the balancing plate, with respect to the reference axis (100) of the balancing bench;
- dimensionally measuring a contour of a reference annular surface of the annular part (16) placed on the balancing plate (12);
- calculating an actual imbalance of the annular part (16) function of the mass of the annular part (16), the measured contour and the apparent imbalance.

2. Balancing method according to claim 1, **characterised in that** the calculation of the actual imbalance of the annular part (16) comprises a calculation of a positioning imbalance of the annular part (16), function of the mass of the annular part (16) and the measured contour.

3. Balancing method according to claim 2, **characterised in that** the calculation of the positioning imbalance of the annular part (16) comprises a calculation of an off-centring of an ideal circle representative of the measured contour with respect to the reference axis (100) of the balancing plate (12), the positioning imbalance being calculated as a function of the mass of the annular part (16) and of the calculated off-centring.

4. Balancing method according to claim 3, **characterised in that** the calculation of the positioning imbalance of the annular part (16) comprises a calculation of the centre of the ideal circle representative of the measured contour, by a predetermined calculation algorithm, preferably by a least squares method.

5. Balancing method according to claim 3 or claim 4, **characterised in that** the calculation of the off-centring delivers at least two numerical values representative of the position of the centre of the ideal circle with respect to the reference axis (100) in a geometric plane perpendicular to the reference axis (100).

6. Balancing method according to any of claims 2 to 5, **characterised in that** the calculation of the positioning imbalance of the annular part (16) delivers at least two numerical values representative of a positioning imbalance vector perpendicular to the reference axis (100).

7. Balancing method according to any of the preceding claims, **characterised in that** the measurement of the apparent imbalance of the annular part (16) delivers at least two numerical values representative of an apparent imbalance vector perpendicular to the reference axis (100).

8. Balancing method according to claims 6 and 7, **characterised in that** the calculation of the actual imbalance of the annular part (16) delivers at least two numerical values representative of an actual imbalance vector perpendicular to the reference axis (100).

9. Balancing method according to claim 8, **characterised in that** the actual imbalance vector is obtained by subtracting the positioning imbalance vector from the apparent imbalance vector.

10. Balancing method according to any of the preceding claims, **characterised in that** it further comprises a measurement of an empty imbalance of the balancing plate.

11. Method according to claims 6, 7 and 10, **characterised in that** the measurement of the empty imbalance delivers at least two numerical values representative of an empty imbalance vector perpendicular to the reference axis (100), the actual imbalance vector being obtained by subtracting the positioning imbalance vector and the empty imbalance vector from the apparent imbalance vector.

12. Balancing method according to any of the preceding claims, **characterised in that** the placing of the annular part (16) comprises a clamping of the annular part (16) on the balancing plate by clamping means.

13. Balancing method according to any of the preceding claims, **characterised in that** it further comprises a reworking of the annular part (16) by machining or addition of material, as a function of the calculated actual imbalance of the annular part (16).

14. Balancing method according to any of the preceding claims, **characterised in that** it comprises a measurement or an input of the mass of the annular part (16).

15. Balancing bench (10) comprising a balancing plate (12) capable of turning around a reference axis (100), means for fastening (14) an annular part (16) to the balancing plate (12), means for measuring (26) an apparent imbalance of a rotating assembly constituted by the balancing plate (12) and the part to balance, **characterised in that** it comprises a device for measuring (32) a contour of the annular part (16), and means for calculating an actual imbalance as a function of the measured apparent imbalance and the measured contour of the annular part (16).
